# EUROPEAN PATENT APPLICATION

(11) **EP 4 841 809 A1**
(43) Date of publication of application: **18.11.2026**
(21) Application number: 24927746.8
(22) Date of filing: 05.03.2024
(51) Int. Cl.: H01M 50/545

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: GUO, Xiaoyong, Ningde, Fujian 352100 (CN); CHEN, Long, Ningde, Fujian 352100 (CN); XU, Hu, Ningde, Fujian 352100 (CN); LI, Xing, Ningde, Fujian 352100 (CN); JIN, Haizu, Ningde, Fujian 352100 (CN); BAI, Lulu, Ningde, Fujian 352100 (CN)
(74) Representative: Ziebig Hengelhaupt Intellectual Property Attorneys Patentanwaltskanzlei PartGmbB
(86) International application number: PCT/CN2024/080052
(87) International publication number: WO 2025/184794

(57) **Abstract**

A battery cell (20), a battery (100), and an electrical device. The battery cell (20) comprises a casing (21), an electrode terminal (22), and an electrode assembly (23), wherein the electrode terminal (22) is disposed on the casing (21) and is insulated from the casing (21); and the electrode assembly (23) is accommodated in the casing (21). The electrode assembly (23) comprises a first tab (232) and a second tab (233), the polarity of the first tab (232) being opposite to the polarity of the second tab (233), the first tab (232) being electrically connected to the electrode terminal (22), and the second tab (233) being electrically connected to the casing (21). The battery cell (20) eliminates the need to provide additional insulating component between the electrode assembly (23) and the casing (21), and allows the provision of only one electrode terminal (22), such that the number of electrode terminals (22) is reduced, and the number of insulating components and sealing components arranged between the electrode terminal (22) and the casing (21) is also reduced, thereby effectively reducing the number of components of the battery cell (20), effectively reducing the size and weight of the battery cell (20), and thus effectively improving the energy density of the battery cell (20).

## Description

### TECHNICAL FIELD

The present application relates to the field of battery technologies, and in particular, to a battery cell, a battery, and an electric device.

### BACKGROUND

Energy conservation and emission reduction are the key to the sustainable development of the automotive industry, and electric vehicles have become an important part of the sustainable development of the automotive industry due to energy saving and environment protection advantages thereof. For electric vehicles, battery technology is an important factor for the development thereof.

The battery usually includes a plurality of battery cells, and due to the large number of parts of a battery cell, the volume and weight of the battery cell increase accordingly, which leads to a decrease in the energy density of the battery cell, and further leads to a decrease in the energy density of the battery.

### SUMMARY

One of the objectives of the embodiments of the present application is: to provide a battery cell, a battery, and an electric device are provided, so as to resolve a technical problem in the related art that an energy density of the battery cell decreases due to a relatively large quantity of components of the battery cell.

To achieve the above-mentioned objective, an embodiment of the present application adopts the technical solutions below:

According to a first aspect, a battery cell is provided, which includes
a casing;
an electrode terminal disposed on the casing and insulated from the casing;
an electrode assembly accommodated in the casing, the electrode assembly including a first tab and a second tab, a polarity of the first tab being opposite to a polarity of the second tab, the first tab being electrically connected to the electrode terminal, and the second tab being electrically connected to the casing.

The beneficial effects of battery cell provided in the embodiments of the present application are as follows: in the battery cell provided in the embodiments of the present application, the electrode terminal is insulated from the casing, the first tab is electrically connected to the electrode terminal, and the second tab is electrically connected to the casing, in other words, the electrode terminal may be used as one of the positive output electrode and the negative output electrode of the battery cell, and the casing may be used as the other of the positive output electrode and the negative output electrode of the battery cell, so that there is no need to additionally provide an insulating components between the electrode assembly and the casing, and only one electrode terminal may be provided, which not only reduces the number of electrode terminals, but also reduces the number of insulating components and sealing components provided between the electrode terminal and the casing, thereby effectively reducing the number of components of the battery cell, effectively reducing the volume and weight of the battery cell, and further effectively improving the energy density of the battery cell.

In some embodiments of the present application, the casing includes a first wall, the electrode terminal is disposed on the first wall and is insulated from the first wall, and the second tab is connected to the first wall.

By adopting the above technical solution, the first tab and the second tab can be led out from the side of the electrode assembly facing the first wall, and the first tab and the second tab are electrically connected to the electrode terminal and the first wall, respectively, so that the first tab and the second tab can share one lead-out space, which optimizes the internal space layout structure of the battery cell, makes the structure of the battery cell more compact, thereby effectively reducing the volume of the battery cell and effectively improving the volumetric energy density of the battery cell.

In some embodiments of the present application, the first wall includes a wall body and a first boss, the electrode terminal is disposed on the wall body and is configured to be electrically connected to one busbar, and the first boss is protruded from a surface of the wall body facing away from the electrode assembly and is configured to be electrically connected to another busbar.

By adopting the above technical solution, the difference between the connection height of one busbar and the electrode terminal and the connection height of the other busbar and the first wall can be reduced, which facilitates the connection device to perform the electrical connection operation on the battery cell and the busbar.

In some embodiments of the present application, the first boss has a first connection surface for connecting the busbar, the electrode terminal has a second connection surface for connecting the busbar, and a height of the first connection surface is equal to a height of the second connection surface.

By adopting the above technical solution, the electrical connection operation between the busbar and the electrode terminal and between the busbar and the first boss can be performed at the same height position, which facilitates the connection device to perform the electrical connection operation between the battery cell and the busbar.

In some embodiments of the present application, the battery cell further includes a first adapter and a second adapter, the first adapter is connected between the electrode terminal and the first tab, and the second adapter is connected between the first wall and the second tab.

By adopting the above technical solution, it is convenient to electrically connect the electrode terminal to the first tab and electrically connect the first wall to the second tab.

In some embodiments of the present application, the first adapter has a third connection surface for connecting the first tab, the second adapter has a fourth connection surface for connecting the second tab, and a height of the third connection surface is equal to a height of the fourth connection surface.

By adopting the above technical solution, the electrical connection operation between the first adapter and the first tab and between the second adapter and the second tab can be performed at the same height position, which facilitates the connection device to electrically connect the electrode assembly to the electrode terminal and the casing.

In some embodiments of the present application, the first wall includes a wall body and a second boss, the electrode terminal is disposed on the wall body, the second boss protrudes from a surface of the wall body facing the electrode assembly, and the second tab is connected to the second boss.

By adopting the above technical solution, the difference between the connection height of the second tab and the first wall and the connection height of the first tab and the electrode terminal can be reduced, which facilitates the connection device to perform the electrical connection operation on the first wall and the second tab.

In some embodiments of the present application, the battery cell further includes a first adapter, the first adapter is connected between the electrode terminal and the first tab, the first adapter has a third connecting surface for connecting the first tab, the second boss has a fifth connecting surface for connecting the second tab, and a height of the third connecting surface is equal to a height of the fifth connecting surface.

By adopting the above technical solution, the electrical connection operation between the first adapter and the first tab and between the second boss and the second tab can be performed at the same height position, which facilitates the connection device to electrically connect the electrode assembly to the electrode terminal and the casing.

In some embodiments of the present application, the second boss has a fifth connection surface for connecting the second tab, the electrode terminal has a sixth connection surface for connecting the first tab, and the height of the fifth connection surface is equal to the height of the sixth connection surface.

By adopting the above technical solution, the electrical connection operation between the electrode terminal and the first tab and between the second boss and the second tab can be performed at the same height position, which facilitates the connection device to electrically connect the electrode assembly to the electrode terminal and the casing.

In some embodiments of the present application, the casing includes a first wall and a second wall, the electrode terminal is disposed on the first wall and is insulated from the first wall, and the second tab is connected to the second wall.

By adopting the above technical solution, it is convenient to electrically connect the second tab to the casing.

In some embodiments of the present application, the second wall is provided with a through hole, the through hole communicates the internal environment of the casing with the external environment of the casing, and the second tab is disposed through the through hole and connected to the second wall.

By adopting the above technical solution, the second tab and the second wall can be electrically connected outside the casing, which facilitates the electrical connection of the second tab to the second wall, thereby effectively improving the assembly efficiency of the battery cell.

In some embodiments of the present application, the battery cell further includes a cover, and the cover covers the through hole and cooperates with the second wall to clamp the second tab.

By adopting the above technical solution, the second tab can be shaped, so that the second tab can be tightly attached to the second wall, thereby reducing the risk of the second tab being detached from the second wall, and also effectively protecting the second tab, thereby reducing the risk of damage to the second tab.

In some embodiments of the present application, a surface of the cover facing away from the electrode assembly is flush with a surface of the second wall facing away from the electrode assembly.

By adopting the above technical solution, the outer surface of the battery cell can be made flatter, so that the battery cell can be neatly arranged inside the battery.

In some embodiments of the present application, the battery cell further includes a positioning member disposed on the second wall, and the positioning member is configured to limit the position of the second tab, so that the second tab is in contact with the second wall.

By adopting the above technical solution, after the positioning member and the electrode assembly are placed in the casing, the position of the second tab can be limited by the positioning member so that the second tab is in contact with the second wall, which facilitates the electrical connection of the second tab to the second wall, thereby effectively improving the assembly efficiency of the battery cell.

In some embodiments of the present application, the positioning member is provided with a positioning hole, and the second tab penetrates through the positioning hole, so that the second tab is in contact with the second wall.

By adopting the above technical solution, the second tab is effectively positioned.

In some embodiments of the present application, the first wall is disposed opposite to the second wall, the electrode assembly further includes an electrode body, the first tab is connected to the side of the electrode body facing the first wall, and the second tab is connected to the side of the electrode body facing the second wall.

By adopting the above technical solution, it is convenient to electrically connect the first tab and the second tab to the electrode terminal and the casing respectively.

In some embodiments of the present application, the casing includes a casing body and a cover body covering the casing body, and the first wall forms the cover body.

By adopting the above technical solution,
in some embodiments of the present application, the battery cell further includes an insulating layer member, and the insulating layer member covers an outer surface of the casing.

By adopting the above technical solution, two adjacent battery cells in the battery are effectively insulated and separated, thereby reducing the risk of short circuit of the battery and effectively improving the safety performance of the battery.

According to some embodiments of the present application, the battery cell is a sodium ion battery cell.

By adopting the above technical solution, not only the production cost of the battery cell is effectively reduced, but also the energy density of the battery cell can be further improved.

In some embodiments of the present application, the casing is one of an aluminum casing, a steel casing, and a copper casing.

By adopting the above technical solution, the risk of electrochemical corrosion of the casing is effectively reduced, thereby effectively improving the reliability of the battery cell.

An embodiment of the present application further provides a battery, including the battery cell according to any one of the foregoing embodiments.

The beneficial effects of the embodiments of the present application are as follows: the battery provided in the embodiments of the present application uses the battery cell according to any one of the foregoing embodiments, thereby effectively improving energy density of the battery.

In some embodiments of the present application, the battery further includes a busbar, there are a plurality of battery cells, and the busbar is electrically connected between an electrode terminal of one battery cell and a casing of another battery cell.

By adopting the above technical solution, it is convenient to electrically connect the battery cells in the battery.

In some embodiments of the present application, the busbar is connected between the electrode terminal of one battery cell and the bottom wall of the casing of the other battery cell; or

The busbar is connected between the electrode terminal of one battery cell and the side wall of the casing of the other battery cell.

By adopting the above technical solution,
in a third aspect, an embodiment of the present application further provides an electric device, including the battery cell provided in the embodiments.

The beneficial effects of the embodiments of the present application are as follows: The electric device provided in this embodiment of the present application uses the battery according to any one of the foregoing embodiments, thereby effectively improving endurance performance of the electric device.

### BRIEF DESCRIPTION OF THE DRAWINGS

To describe technical solutions in embodiments of the present application more clearly, the following briefly describes the accompanying drawings for describing the embodiments or the conventional technology. It is clear that the accompanying drawings described in the following are merely some embodiments of the present application. Those of ordinary skill in the art can still derive other accompanying drawings from these accompanying drawings without creative efforts.
FIG. 1 is a schematic structural view of a vehicle according to an embodiment of the present application;
FIG. 2 is an exploded view of a battery according to an embodiment of the present application;
FIG. 3 is a schematic structural view of a connection structure between two adjacent battery cells in a battery according to one embodiment of the present application;
FIG. 4 is a schematic structural view of a connection structure between two adjacent battery cells in a battery according to another embodiment of the present application;
FIG. 5 is a schematic structural view of a connection structure between two adjacent battery cells in a battery according to further one embodiment of the present application;
FIG. 6 is a schematic structural view of a battery cell according to one embodiment of the present application;
FIG. 7 is a schematic top view of the battery cell shown in FIG. 6;
FIG. 8 is a schematic sectional view of the battery cell shown in FIG. 7 taken along the line A-A;
FIG. 9 is a schematic enlarged view of the structure at portion B of the battery cell shown in FIG. 8;
FIG. 10 is a schematic enlarged view of the structure at portion C of the battery cell shown in FIG. 8;
FIG. 11 is a schematic structural view of a battery cell provided in another embodiment of the present application;
FIG. 12 is a schematic top view of the structure of the battery cell shown in FIG. 11;
FIG. 13 is a schematic sectional view of the battery cell shown in FIG. 12 taken along the line D-D;
FIG. 14 is a schematic enlarged view of the structure at portion E of the battery cell shown in FIG. 13;
FIG. 15 is a schematic enlarged view of the structure at portion F of the battery cell shown in FIG. 13;
FIG. 16 is a schematic structural view of a battery cell provided according to further one embodiment of the present application;
FIG. 17 is a schematic exploded view of the battery cell shown in FIG. 16;
FIG. 18 is a schematic top view of the battery cell shown in FIG. 16;
FIG. 19 is a schematic sectional view of the battery cell shown in FIG. 18 taken along line G-G;
FIG. 20 is a schematic enlarged view of the structure at portion H of the battery cell shown in FIG. 19;
FIG. 21 is a schematic structural view of the battery cell provided according to further another embodiment of the present application;
FIG. 22 is a schematic explosed view of the battery cell shown in FIG. 21.

### Description of reference signs:

1000: vehicle;
100: battery;
10: box; 11: first portion; 12: second portion;
20: battery cell; 21: casing; 211: casing body; 2111: second wall; 21111: through hole; 212: covering body; 213: first wall; 2131: wall body; 2132: first boss; 21321: first connecting surface; 2133: second boss; 21331: first connecting surface; 22: electrode terminal; 221: second connecting surface; 23: electrode assembly; 231: electrode body; 232: first tab; 233: first tab; 24: first adapter; 241: third connecting surface; 25: second adapter; 251: first connecting surface; 26: cover; 27: positioning member; 28: pressure relief mechanism;
30: busbar;
200: controller;
300: motor.

### DETAILED DESCRIPTION OF PREFERRED EMBODIMENTS

In order to make the technical problem to be solved, technical solution and beneficial effect of the present application clearer, the present application will be further described in detail below with reference to the figures and embodiments. It should be understood that the specific embodiments described herein are only used to explain the present application and are not used to limit the present application.

As noted, when an element is referred to as being "fixed on" or "disposed on" another element, it may be directly or indirectly on another element. When an element is referred to as being "connected to" another element, it can be directly or indirectly connected to another element.

It should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In addition, the terms "first," "second," "third," "fourth," "fifth," and "sixth" are only used for descriptive purposes, and should not be construed as indicating or implying relative importance or implicitly indicating the number of technical features indicated. Thus, a feature defined by "first," "second," "third," "fourth," "fifth," and "sixth" may explicitly or implicitly include one or more of such features. In the description of the present application, the meaning of "a plurality of" is two or more, unless otherwise specifically defined.

A battery cell, as the smallest unit constituting a battery, generally includes a casing, an electrode assembly, an electrolyte, and two electrode terminals. The casing is configured to provide an internal environment of the battery cell, the internal environment is configured to accommodate the electrode assembly and electrolyte, the two electrode terminals are disposed on a wall portion of the casing and are insulated from the wall portion of the casing, the electrode assembly includes two tabs, one tab is electrically connected to one electrode terminal, and the other tab is electrically connected to the other electrode terminal, to output or input electric energy of the battery cell.

In the related art, in order to improve the safety performance of the battery cell, it is usually necessary to provide an insulating component between the electrode terminal and the casing and between the electrode assembly and the casing, so that the electrode terminal is insulated from and separated from the casing and the electrode assembly is insulated from and separated from the casing, and at the same time, in order to reduce the risk of electrolyte leakage, it is usually necessary to provide a sealing component between the electrode terminal and the casing to close the gap between the electrode terminal and the casing, so that the number of components of the battery cell is large, and the volume and weight of the battery cell increase accordingly, resulting in a decrease in the energy density of the battery cell, and thus the energy density of the battery also decreases.

In order to improve the energy density of the battery cell, in the battery cell provided by the embodiments of the present application, the electrode terminal is insulated from the casing, the first tab is electrically connected to the electrode terminal, and the second tab is electrically connected to the casing, in other words, the electrode terminal may be used as one of the positive output electrode and the negative output electrode of the battery cell, and the casing may be used as the other of the positive output electrode and the negative output electrode of the battery cell, so that there is no need to additionally provide an insulating component between the electrode assembly and the casing, and only one electrode terminal may be provided, which not only reduces the number of electrode terminals, but also reduces the number of insulating components and sealing components provided between the electrode terminal and the casing, thereby effectively reducing the number of components of the battery cell, the volume and weight of the battery cell, and further effectively improving the energy density of the battery cell.

The battery disclosed in the embodiments of the present application can be used in an electrical device using a battery as a power supply or various energy storage systems using a battery as an energy storage element. The electric device may be a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

For ease of description, the following embodiments are described by using an example in which an electric device in an embodiment of the present application is a vehicle.

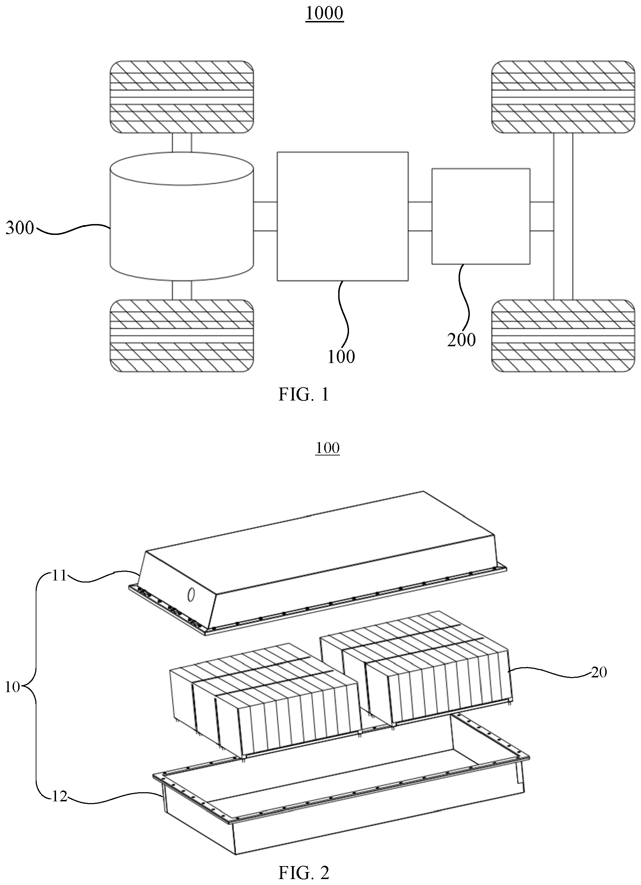

Referring to FIG. 1, FIG. 1 is a schematic structural view of a vehicle 1000 provided by an embodiment of the present application. A battery 100 is arranged inside the vehicle 1000. The battery 100 may be arranged at a bottom, head, or tail of the vehicle 1000. The battery 100 may be configured to power the vehicle 1000. For example, the battery 100 may be used as an operating power source of the vehicle 1000. The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG.2 is an exploded view of a battery 100 according to an embodiment of the present application. The battery 100 includes a box 10 and a battery cell 20. The battery cell 20 is accommodated in the box 10. Here, the box 10 is configured to provide an accommodating space for the battery cell 20, and the box 10 may adopt multiple structures. In some embodiments, the box 10 may include a first portion 11 and a second portion 12, where the first portion 11 and the second portion 12 fit to each other to define an accommodation space for accommodating the battery cell 20. The second portion 12 may be of a hollow structure with an opening at one end, the first portion 11 may be of a plate-shaped structure, and the first portion 11 covers an opening side of the second portion 12, such that the first portion 11 and the second portion 12 jointly define the accommodating space. The first portion 11 and the second portion 12 may each be of a hollow structure with an opening in one side, with the opening side of the first portion 11 covering the opening side of the second portion 12. Certainly, the box 10 formed by the first portion 11 and the second portion 12 may be in various shapes such as a cylinder and a cuboid.

In the battery 100, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection. A plurality of battery cells 20 may be directly connected in series, in parallel, or in a combination of both, and the whole of the plurality of battery cells 20 is accommodated in the box 10. Certainly, the battery 100 may also be formed in a manner that a plurality of battery cells 20 are subjected to series connection, parallel connection, or series-parallel connection to form battery modules, and the plurality of battery modules are then subjected to series connection, parallel connection, or series-parallel connection to form an integrated unit, which is accommodated in the box 10.

Wherein, each battery cell 20 may be a secondary battery or a primary battery, where the secondary battery cell refers to a battery cell that may be continuously used by activating an active material by means of charging the battery cell after the battery cell is discharged, the primary battery cell refers to a battery cell that may not be continuously used by activating an active material by means of charging the battery cell after the electric energy of the battery cell is depleted. The battery cell 20 may be a lithium ion battery cell, a sodium ion battery cell, a sodium-lithium ion battery cell, a lithium metal battery cell, a sodium metal battery cell, a lithium-sulfur battery cell, a magnesium ion battery cell, a nickel-hydrogen battery cell, a nickel-cadmium battery cell, a lead-acid battery cell, or the like, which is not limited thereto. As an example, the battery cell 20 may be a cylindrical battery cell, a prismatic battery cell, a pouch battery cell, or a battery cell of other shapes. The prismatic battery cell includes a square-casing battery cell, a blade-shaped battery cell, and a multi-prism battery cell, for example, a hexagonal prism battery cell, and the like, which is not particularly limited by the present application.

Of course, in some embodiments, the battery 100 may not include the box 10; instead, a plurality of battery cells 20 may be electrically connected and, after being integrated with necessary fixing structures, assembled into the vehicle 1000.

To illustrate the technical solution provided by the present application, detailed description is made below in combination with specific drawings and embodiments.

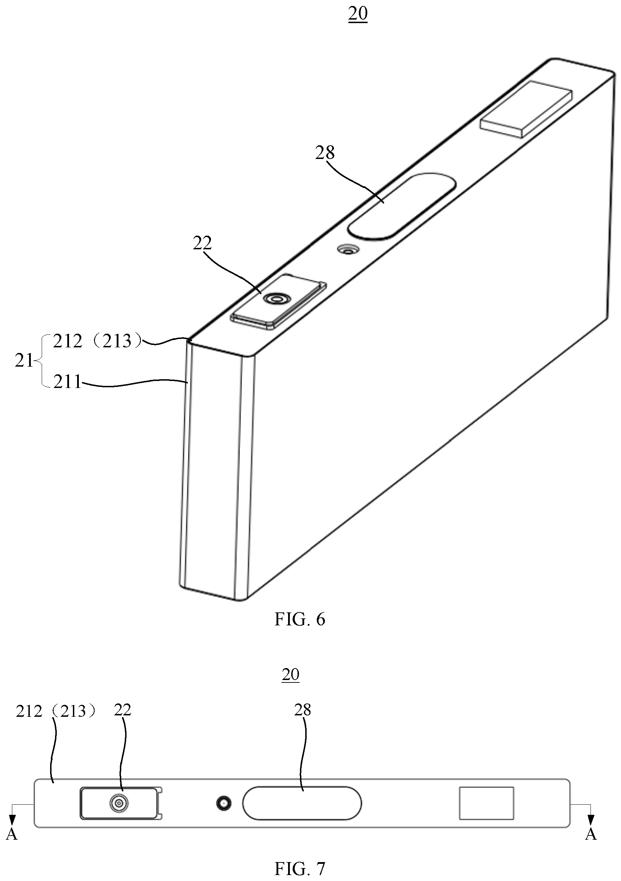

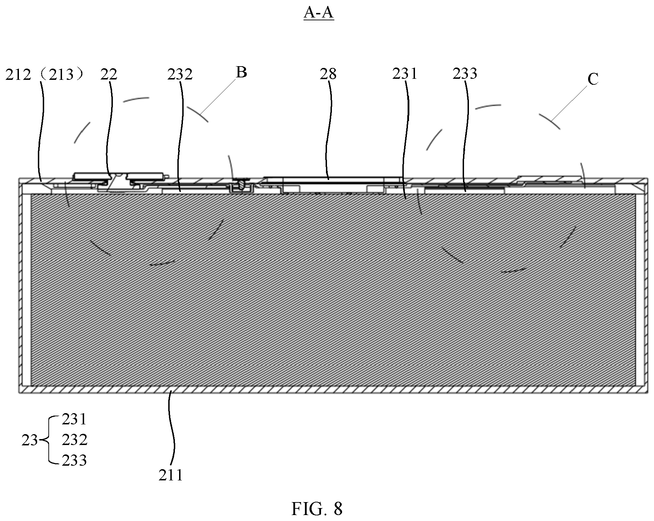

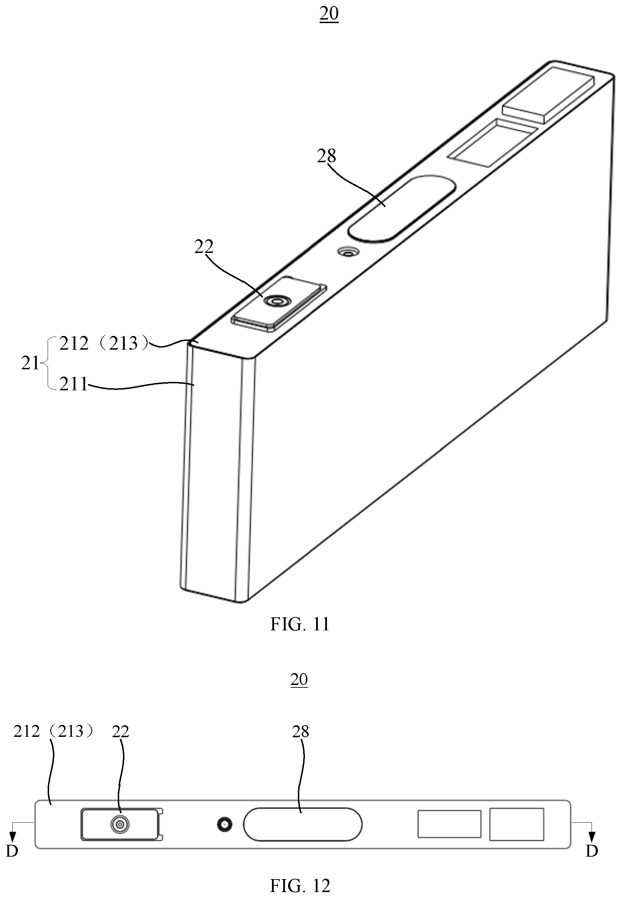

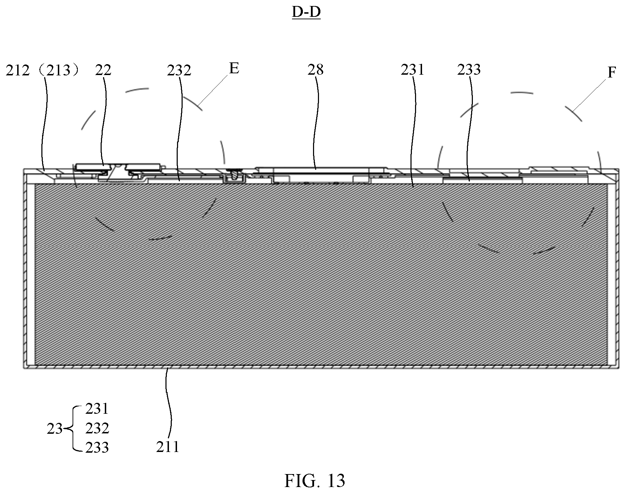

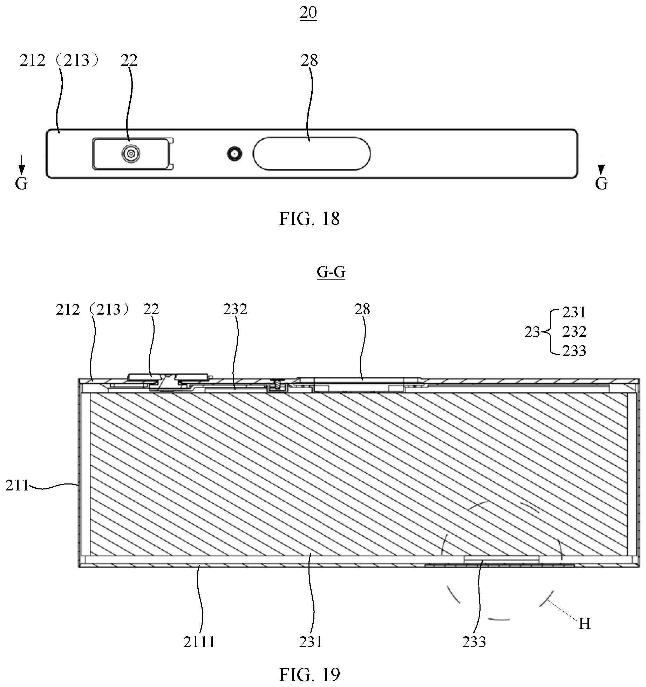

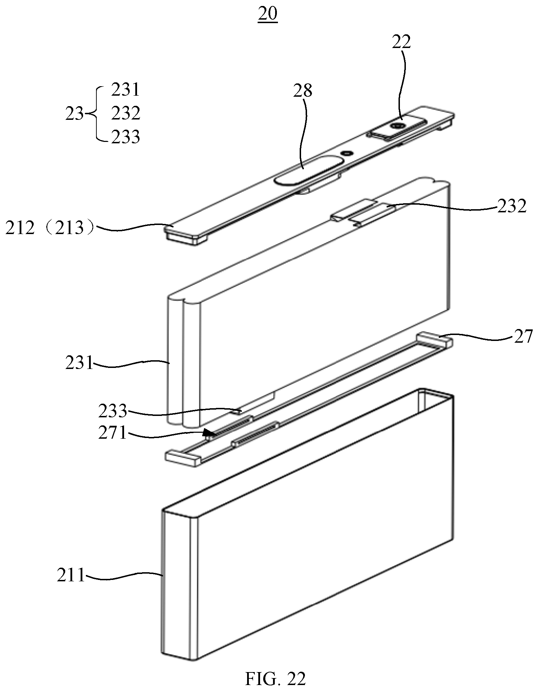

In a first aspect, referring to FIG. 6 to FIG. 22 together, an embodiment of the present application provides a battery cell 20, including a casing 21, an electrode terminal 22, and an electrode assembly 23, where the electrode terminal 22 is disposed on the casing 21 and is insulated from the casing 21, the electrode assembly 23 is accommodated in the casing 21, the electrode assembly 23 includes a first tab 232 and a second tab 233, the polarity of the first tab 232 is opposite to the polarity of the second tab 233, the first tab 232 is electrically connected to the electrode terminal 22, and the second tab 233 is electrically connected to the casing 21.

The casing 21 serves to provide an internal environment of the battery cell 20. Here, the internal environment may be used to accommodate the electrode assembly 23, an electrolyte, and other components. At least the portion of the housing 21 that is electrically connected to the second tab 233 is made of a conductive material, and the conductive material may be, but is not limited to, aluminum, steel, copper, or the like, and in some embodiments, the entire casing 21 is made of a conductive material, in other words, the casing 21 may be, but is not limited to, an aluminum casing, a steel casing, a copper casing, or the like.

In some embodiments, the casing 21 may include a casing body 211 and a cover body 212. Wherein, the internal environment is formed inside the casing body 211, the casing body 211 may be an independent component, and an opening may be disposed on the casing body 211. The cover body 212 is a component that covers the opening of the casing body 212 to isolate an internal environment of the battery cell 20 from an external environment. Specifically, the casing body 211 and the cover body 212 may first form a common connecting surface before other components are inserted into the casing . When it is necessary to enclose the interior of the casing body 211, the cover body 212 then covers the opening of the casing body 211. Optionally, the casing body 211 may be in various shapes and various dimensions, such as a cuboid, a cylinder, a hexagonal prism, and the like. The shape of the cover body 212 may be adapted to a shape of the casing body 211 to match the casing body 211.

The electrode terminal 22 is a component electrically connected to the electrode assembly 23 for outputting or inputting electrical energy. In some embodiments, the casing 21 is provided with an electrode lead-out hole, the motor lead-out hole may be provided on the cover body 212 or the casing body 211, the electrode terminal 22 is provided in the electrode lead-out hole, a part of the electrode terminal 22 protrudes into the internal environment of the battery cell 20 and is directly or indirectly connected to the electrode assembly 23, and the other part of the electrode terminal 22 protrudes into the external environment of the battery cell 20 and is connected to components such as the busbar 30 and the sampling device. Optionally, the electrode terminal 22 may be in a columnar structure, such as a cylindrical structure, a prismatic structure, etc., and the electrode terminal 22 may be in a plate-like structure, such as a circular plate, a square plate, etc., or the electrode terminal 22 may be in other irregular three dimensional structures, which is not specifically limited herein. It can be understood that the electrode terminal 22 is made of a conductive material, and the electrode terminal 22 may be made of one conductive material or a plurality of conductive materials, and the conductive material may be, but is not limited to, copper, aluminum, nickel, zinc, iron, etc., which is not specifically limited herein.

In some embodiments, the battery cell 20 further includes an insulating member, and the insulating member is disposed between the electrode terminal 22 and the casing 21 to insulate and separate the electrode terminal 22 from the casing 21.

In some embodiments, the battery cell 20 further includes a sealing member, and the sealing member is disposed between the electrode terminal 22 and the hole wall of the electrode lead-out hole to seal a gap between the electrode terminal 22 and the hole wall of the electrode lead-out hole.

In some embodiments, the battery cell 20 further includes a pressure relief mechanism 28 for relieving internal pressure when the internal pressure or temperature of the battery cell reaches a threshold. The pressure relief mechanism 28 may be mounted on the cover body 212 or may be mounted on the casing body 211.

The electrode assembly 23 is a component in the battery cell 20 in which an electrochemical reaction occurs. The casing body 20 may include one or more electrode assemblies 23. The electrode assembly 23 includes an electrode body 231, the electrode body 231 is mainly made of a positive electrode plate, a negative electrode plate and a separator by a winding process or a stacking process, a plurality of positive electrode plates and a plurality of negative electrode plates may be provided respectively, and the plurality of positive electrode plates and the plurality of negative electrode plates are alternately stacked. In some embodiments, a plurality of positive electrode plates may be provided, the negative electrode plate may be folded to form a plurality of folding sections that are stacked, and one positive electrode plate is sandwiched between adjacent folding sections. In some other embodiments, both the positive electrode plate and the negative electrode plate are folded to form a plurality of folding sections that are stacked, and the folding sections of the positive electrode plate and the folding sections of the negative electrode plate are alternately stacked. In some embodiments, a plurality of spacers may be provided between any adjacent positive electrode plates or negative electrode plates respectively. In some embodiments, the spacer may be continuously provided between any adjacent positive electrode plates or negative electrode plates by folding or winding. The electrode assembly 23 can be, but is not limited to, a cylindrical shape, a flat shape, a polygonal column shape, or the like. During charging and discharging of the battery cell 20, active ions (e.g., lithium ions) are repeatedly intercalated and deintercalated between the positive electrode plate and the negative electrode plate. The spacer is disposed between the positive electrode plate and the negative electrode plate to prevent the positive electrode plate and the negative electrode plate from being short-circuited and to allow active ions to pass therethrough.

The positive electrode plate 231 includes a positive electrode current collector and a positive electrode active material disposed on at least one surface of the positive electrode current collector. In some embodiments, the positive electrode current collector has two surfaces opposite in the thickness direction thereof, and a positive active material is provided on either one or both of the two opposite surfaces of the positive electrode current collector.

As an example, a metal foil, a composite current collector, or a metal foam may be used for the positive electrode current collector. For example, as the metal foil, aluminum or stainless steel which is subjected to surface treatment by silver, stainless steel, copper, aluminum, nickel, carbon electrode, carbon, nickel, titanium, or the like can be employed. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like). The foamed metal may be foamed nickel, foamed copper, foamed aluminum, foamed alloy, foamed carbon, or the like. When the foamed metal is used as the positive electrode, the surface of the foamed metal may not be provided with the positive active material, and of course, the positive active material may also be provided. As an example, within the foamed metal, a lithium source material, which is a lithium metal and/or a lithium-rich material, a potassium metal or a sodium metal may also be filled or/and deposited.

As an example, the positive active material may include at least one of the following materials: a lithium-containing phosphate, a lithium transition metal oxide, and respective modified compounds thereof. However, the present application is not limited to these materials, and another conventional material that can be used as a positive electrode active material of a battery cell 2020 may also be used. These positive active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium transition metal oxide may include but are not limited to at least one of lithium cobalt oxide (e.g., LiCoO₂), lithium nickel oxide (e.g., LiNiO₂), lithium manganese oxide (e.g., LiMnO₂ or LiMn₂O₂), lithium nickel cobalt oxide, lithium manganese cobalt oxide, lithium nickel manganese oxide, lithium nickel cobalt manganese oxide (e.g., LiNi1/3Co1/3Mn1/3O₂ (also simply referred to as NCM333), LiNi0.5Co0.2Mn0.3O₂ (also simply referred to as NCM523), LiNi0.5Co0.25Mn0.25O₂ (also simply referred to as NCM211), LiNi0.6Co0.2Mn0.2O₂ (also simply referred to as NCM622), LiNi0.8Co0.1Mn0.1O₂ (also simply referred to as NCM811)), lithium nickel cobalt aluminum oxide (e.g., LiNi0.85Co0.15Al0.05O₂), modified compounds thereof,, and the like.

The negative electrode plate may include a negative electrode current collector and a negative active material provided on at least one surface of the negative electrode current collector. In some embodiments, the negative electrode current collector has two surfaces opposite in the thickness direction thereof, and a negative active material is provided on either one or both of the two opposite surfaces of the negative electrode current collector.

As an example, a metal foil, a composite current collector or metal foam may be used for the negative electrode current collector. For example, as the metal foil, aluminum or stainless steel which is subjected to surface treatment by silver, stainless steel, copper, aluminum, nickel, carbon electrode, carbon, nickel, titanium, or the like can be employed. The composite current collector may include a macromolecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like). The foamed metal may be foamed nickel, foamed copper, foamed aluminum, foamed alloy, foamed carbon, or the like.

As an example, the negative active material may use a negative active material which is known in the art for a battery cell 20. As an example, the negative active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as a negative active material of the battery cell 20 may also be used. These negative electrode active materials may be used alone or in combination of two or more thereof.

In some embodiments, the material of the positive electrode current collector may be aluminum and the material of the negative electrode current collector may be copper.

In some embodiments, the spacer is a separator. The type of the separator is not particularly limited in the present application, and any well-known porous separator with good chemical stability and mechanical stability may be used. For example, the material of the separator may be selected from at least one of glass fibers, nonwoven fabrics, polyethylene, polypropylene, and polyvinylidene fluoride. The separator may be a single-layer film or a multi-layer composite film. When the separator is a multi-layer composite thin film, the materials of respective layers may be the same or different. The spacer may be a single component located between the positive electrode plate and negative electrode plate, or may be attached to the surfaces of the positive electrode plate and negative electrode plate.

In some embodiments, the spacer is a solid electrolyte. The solid electrolyte is disposed between the positive electrode plate and the negative electrode plate, and serves to transfer ions and separate the positive electrode plate and negative electrode plate.

In some embodiments, the battery cell 20 further includes an electrolyte that functions to conduct ions between the positive electrode plate and negative electrode plate. The type of the electrolyte is not specifically limited in the present application, and may be selected according to a requirement. The electrolyte may be, but is not limited to, a liquid electrolyte, a gel electrolyte, a solid electrolyte, or the like. In the case where the electrolyte is a liquid electrolyte, a liquid injection hole may be provided on the battery cell 20, and the liquid injection hole communicates the internal environment of the battery cell 20 with the external environment of the battery cell 20. The liquid injection hole may be provided on the casing 21, for example, the liquid injection hole is provided on the cover body 212, for another example, the liquid injection hole is provided on the casing body 211, and the liquid injection hole may also be provided on the electrode terminal 22. After the battery cell 20 is assembled, the electrolyte may be input into the internal environment of the battery cell 20 through the liquid injection hole.

The electrode assembly 23 is provided with a tab 21 that may conduct current from the electrode assembly 231. The tabs include a first tab 232 and a second tab 233, and the polarity of the first tab 232 is opposite to the polarity of the second tab 233, that is, one of the first tab 232 and the second tab 233 is a positive tab, and the other of the first tab 232 and the second tab 233 is a negative tab. The first tab 232 may be directly or indirectly connected to the electrode terminal 22, and similarly, the second tab 233 may be directly or indirectly connected to the casing 21.

In some embodiments, the first tab 232 is a positive tab, the first tab 232 is connected between the positive electrode plate and the electrode terminal 22, the second tab 233 is a negative tab, the second tab 233 is connected between the negative electrode plate and the casing 21, and the second tab 233 may be connected to the cover body 212 or the casing body 211, in other words, in this embodiment, the electrode terminal 22 serves as a positive output electrode of the battery cell 20, and the casing 21 serves as a negative output electrode of the battery cell 20.

In other embodiments, the first tab 232 is a negative tab, the first tab 232 is connected between the negative electrode plate and the electrode terminal 22, the second tab 233 is a positive tab, the second tab 233 is connected between the positive electrode plate and the casing 21, and the second tab 233 may be connected to the cover body 212 or the casing body 211, in other words, in this embodiment, the electrode terminal 22 is used as a negative output electrode of the battery cell 20, and the casing 21 is used as a positive output electrode of the battery cell 20.

In some embodiments, the battery cell 20 is a sodium ion battery cell, and the casing 21 is an aluminum casing. Since sodium ions will not electrochemically react with aluminum, the use of an aluminum shell as the casing 21 of the battery cell 20 can reduce the risk of corrosion of the casing 21 and effectively improve the performance of the battery cell 20. In addition, the sodium ion battery cell has a high energy density and a rich sodium element reserve, which effectively reduces the production cost of the battery cell 20. In addition, the aluminum shell has a small weight, which can further improve the mass energy density of the battery cell 20, and the aluminum shell has good structural strength, which can effectively improve the structural strength of the battery cell 20.

In the battery cell 20 provided in this embodiment of the present application, the electrode terminal 22 is insulated from the casing 21, the first tab 232 is electrically connected to the electrode terminal 22, and the second tab 233 is electrically connected to the casing 21, in other words, the electrode terminal 22 may be used as one of the positive output electrode and the negative output electrode of the battery cell 20, and the casing 21 may be used as the other of the positive output electrode and the negative output electrode of the battery cell 20, so that no additional insulating component needs to be disposed between the electrode assembly 23 and the casing 21, and only one electrode terminal 22 may be disposed, which not only reduces a quantity of electrode terminals 22, but also reduces a quantity of insulating components and sealing components that are disposed between the electrode terminal 22 and the casing 21, thereby effectively reducing a quantity of components of the battery cell 20, effectively reducing a volume and a weight of the battery cell 20, and further effectively improving energy density of the battery cell 20.

In addition, because the quantity of components of the battery cell 20 provided in this embodiment of the present application is relatively small, production costs of the battery cell 20 are effectively reduced.

In some embodiments of the present application, referring to FIG. 6 to FIG. 15 together, the casing 21 includes a first wall 213, the electrode terminal 22 is disposed on the first wall 213 and is insulated from the first wall 213, and the second tab 233 is electrically connected to the first wall 213.

The first wall 213 may constitute the cover body 212 described above, or may constitute any wall portion of the casing body 211 described above. In some embodiments, the first wall 213 forms the cover body 212 described above, in other words, the electrode lead-out hole may be formed in the first wall 213 and the electrode terminal 22 is disposed in the electrode lead-out hole. The second tab 233 is electrically connected to the first wall 213, that is, the first tab 232 and the second tab 233 are connected to the same side of the battery cell 20.

In some embodiments, the entire first wall 213 is made of a conductive material, the electrode terminal 22 is insulated from the first wall 213, and the second tab 233 may be electrically connected to any part of the first wall 213.

Of course, in other embodiments, only the portion of the first wall 213 that is in contact with the second tab 233 may be made of a conductive material.

By adopting the above technical solution, the first tab 232 and the second tab 233 can be led out from the side of the electrode assembly 23 facing the first wall 213, and the first tab 232 and the second tab 233 are electrically connected to the electrode terminal 22 and the first wall 213, respectively, so that the first tab 232 and the second tab 233 can share one lead-out space, which optimizes the internal space layout structure of the battery cell 20, makes the structure of the battery cell 20 more compact, thereby effectively reducing the volume of the battery cell 20 and effectively improving the volumetric energy density of the battery cell 20.

In some embodiments of the present application, referring to FIG. 6 to FIG. 15 together, the first wall 213 includes a wall body 2131 and a first boss 2132, the electrode terminal 22 is disposed on the wall body 2131 and is configured to be electrically connected to one busbar 30, and the first boss 2132 is protruded from a surface of the wall body 2131 facing away from the electrode assembly 23 and is configured to be electrically connected to another busbar 30.

The wall body 2131 is a main body part of the first wall 213, and in a case where the first wall 213 constitutes the cover body 212, the wall body 2131 is covered at the opening of the casing body 211 to isolate the internal environment of the battery cell 20 from the external environment of the battery cell 20. In this embodiment, the above-mentioned electrode lead-out hole may be formed in the wall body 2131 and the electrode terminal 22 is disposed in the electrode lead-out hole, and at least a part of the electrode terminal 22 protrudes from the surface of the wall body 2131 facing away from the electrode assembly 23 and is configured to be electrically connected to the busbar 30.

The first boss 2132 is a portion of the first wall 213 for connecting the busbar 30. In some embodiments, the first boss 2132 and the wall 2131 may be an integrally formed member, for example, the first boss 2132 and the wall 2131 are integrally formed by a stamping process. In other embodiments, the first boss 2132 and the wall body 2131 may be separately formed and then connected as a whole, and the connection manner between the first boss 2132 and the wall body 2131 may be, but is not limited to, welding, bonding, fastening, or the like. It can be understood that the first boss 2132 protrudes from the surface of the wall body 2131 facing away from the electrode assembly 23 in a direction away from the electrode assembly 23, at least a part of the electrode terminal 22 protrudes from the surface of the wall body 2131 facing away from the electrode assembly 23 in a direction away from the electrode assembly 23, and the protruding height of the first boss 2132 relative to the surface of the wall body 2131 facing away from the electrode assembly 23 may be the same as or different from the protruding height of the electrode terminal 22 relative to the surface of the wall body 2131 facing away from the electrode assembly 23. The shape of the first boss 2132 may be the same as the shape of the electrode terminal 22, or the shape of the electrode terminal 22 may be different, and the shape of the first boss 2132 may be, but is not limited to, cylindrical, prismatic, or the like. The first boss 2132 is configured to be electrically connected to one busbar 30, and the electrode terminal 22 is configured to be electrically connected to the other busbar 30. The connection manner between the first boss 2132 and the busbar 30 may be, but is not limited to, welding, bonding, fastening, and the like, and similarly, the connection manner between the electrode terminal 22 and the busbar 30 may be, but is not limited to, welding, bonding, fastening, and the like.

In some embodiments, in two adjacent battery cells 20 of the battery 100, one busbar 30 is connected between the electrode terminal 22 of the first battery cell 20 and the first boss 2132 of the second battery cell 20, and the other busbar 30 is connected between the first boss 2132 of the first battery cell 20 and the electrode terminal 22 of the second battery cell 20, so that the two adjacent battery cells 20 of the battery 100 are connected in series.

In some other embodiments, in two adjacent battery cells 20 of the battery 100, one busbar 30 is connected between the electrode terminal 22 of the first battery cell 20 and the electrode terminal 22 of the second battery cell 20, and the other busbar 30 is connected between the first boss 2132 of the first battery cell 20 and the first boss 2132 of the second battery cell 20, so that the two adjacent battery cells 20 of the battery 100 are connected in parallel.

By adopting the above technical solution, the difference between the connection height of one busbar 30 and the electrode terminal 22 and the connection height of the other busbar 30 and the first wall 213 can be reduced, which facilitates the connection device to perform the electrical connection operation on the battery cell 20 and the busbar 30.

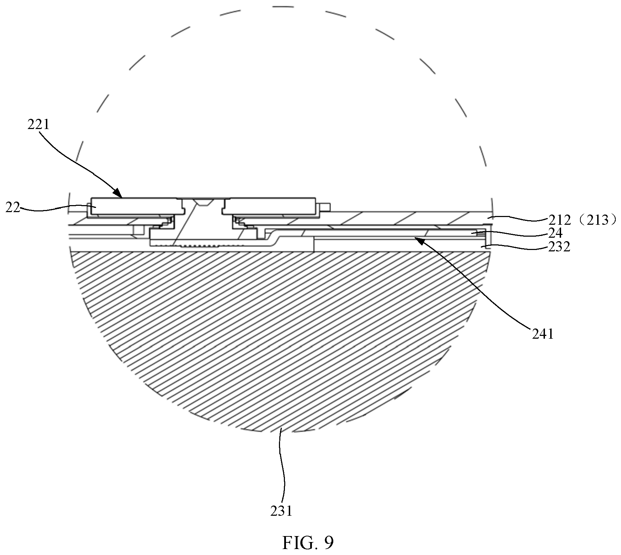

In some embodiments of the present application, referring to FIG. 9, FIG. 10, FIG. 14 and FIG. 15 together, the first boss 2132 has a first connecting surface 21321 for connecting the busbar 30, the electrode terminal 22 has a second connecting surface 221 for connecting the busbar 30, and the height of the first connecting surface 21321 is equal to the height of the second connecting surface 221.

The first connecting surface 21321 is a surface of the first boss 2132 for connecting the busbar 30. In some embodiments, the first connection surface 21321 is a surface of the first boss 2132 facing away from the electrode assembly 23. The first connecting surface 21321 may be a flat surface or a curved surface.

The second connection surface 221 is a surface of the electrode terminal 22 for connecting the busbar 30. In some embodiments, the second connection surface 221 is a surface of the electrode terminal 22 facing away from the electrode assembly 23. The second connecting surface 221 may be a flat surface or a curved surface.

The height of the first connecting surface 21321 is equal to the height of the second connecting surface 221, in other words, in this embodiment, the protruding height of the first boss 2132 relative to the surface of the wall body 2131 facing away from the electrode assembly 23 is the same as the protruding height of the electrode terminal 22 relative to the surface of the wall body 2131 facing away from the electrode assembly 23, that is, the electrical connection operation can be performed between the busbar 30 and the electrode terminal 22 and between the busbar 30 and the first boss 2132 at the same height position.

It should be noted that, due to manufacturing tolerances, there may be a certain height difference between the first connecting surface 21321 and the second connecting surface 221, and in this embodiment, the height difference between the first connecting surface 21321 and the second connecting surface 221 is less than or equal to 0.05 mm, that is, the height of the first connecting surface 21321 is equal to the height of the second connecting surface 221.

In the related art, the connecting device is usually used to electrically connect the battery cell 20 and the busbar 30, and if the protruding height of the electrode terminal 22 relative to the surface of the wall body 2131 facing away from the electrode assembly 23 is greatly different from the height of the portion of the first wall 213 for connecting the busbar 30, the connecting device needs to electrically connect the electrode terminal 22 and one busbar 30 at one height position, and electrically connect the first wall 213 and the other busbar 30 at the other height position, which may cause the movement trajectory of the connecting head of the connecting device to become complicated, affect the welding accuracy of the connecting device, and even cause a virtual welding phenomenon.

By adopting the above technical solution, the electrical connection operation between the busbar 30 and the electrode terminal 22 and between the busbar 30 and the first boss 2132 can be performed at the same height position, which facilitates the connection device to perform the electrical connection operation between the battery cell 20 and the busbar 30.

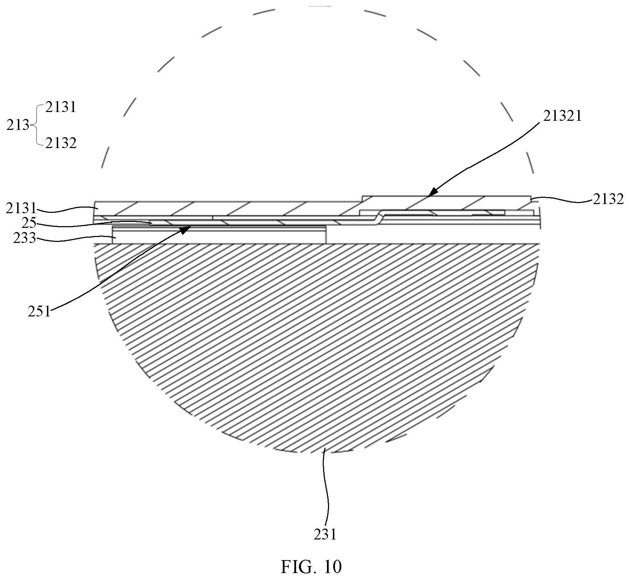

In some embodiments of the present application, referring to FIG. 9 and FIG. 10 together, the battery cell 20 further includes a first adapter 24 and a second adapter 25, the first adapter 24 is connected between the electrode terminal 22 and the first tab 232, and the second adapter 25 is connected between the first wall 213 and the second tab 233.

The first adapter 24 is a component for connecting the electrode terminal 22 and the first tab 232, in other words, in the present embodiment, the electrode terminal 22 and the first tab 232 are indirectly connected through the first adapter 24, so that the electrode terminal 22 is conductively connected to the first tab 232. The connection manner between the electrode terminal 22 and the first adapter 24 may be, but is not limited to, welding, bonding, fastening, or the like, and the connection manner between the first tab 232 and the first adapter 24 may be, but is not limited to, welding, bonding, fastening, or the like.

The second adapter 25 is a component for connecting the first wall 213 and the second tab 233, in other words, in this embodiment, the first wall 213 and the second tab 233 are indirectly connected through the second adapter 25, so that the first wall 213 is conductively connected to the second tab 233. The connection manner between the first wall 213 and the second adapter 25 may be, but is not limited to, welding, bonding, fastening, or the like, and the connection manner between the second tab 233 and the second adapter 25 may be, but is not limited to, welding, bonding, fastening, or the like.

By adopting the above technical solution, it is convenient to electrically connect the electrode terminal 22 with the first tab 232 and electrically connect the first wall 213 with the second tab 233.

In some embodiments of the present application, referring to FIG. 9 and FIG. 10 together, the first adapter 24 has a third connecting surface 241 for connecting the first tab 232, the second adapter 25 has a fourth connecting surface 251 for connecting the second tab 233, and the height of the third connecting surface 241 is equal to the height of the fourth connecting surface 251.

The third connection surface 241 is the surface of the first adapter 24 for connecting the first tab 232. In some embodiments, the third connecting surface 241 is the surface of the first adapter 24 facing the electrode assembly 23. The third connecting surface 241 may be a flat surface or a curved surface.

The fourth connection surface 251 is a surface of the second adapter 25 for connecting the second tab 233. In some embodiments, the fourth connecting surface 251 is a surface of the second adapter 25 facing the electrode assembly 23. The second connecting surface 251 may be a flat surface or a curved surface.

The height of the third connection surface 241 is equal to the height of the fourth connection surface 251, and in some embodiments, in the case where the third connection surface 241 and the fourth connection surface 251 are planes, the third connection surface 241 and the fourth connection surface 251 are located on the same horizontal plane (a plane perpendicular to the height direction of the battery cell 20), and correspondingly, the lead-out height of the first tab 232 from the electrode body 231 toward the third connection surface 241 is equal to the lead-out height of the second tab 233 from the electrode body 231 toward the fourth connection surface 251, that is, the electrical connection operation can be performed between the first adapter 24 and the first tab 232 and between the second adapter 25 and the second tab 233 at the same height position.

It should be noted that, due to manufacturing tolerances, there may be a certain height difference between the third connecting surface 241 and the fourth connecting surface 251, and in this embodiment, the height difference between the third connecting surface 241 and the fourth connecting surface 251 is less than or equal to 0.05 mm, that is, the height of the third connecting surface 241 is equal to the height of the fourth connecting surface 251.

In the related art, the connecting device is usually used to perform an electrical connection operation on the first tab 232 and the first adapter 24 and perform an electrical connection operation on the second tab 233 and the second adapter 25, and if the height of the third connecting surface 241 is greatly different from the height of the fourth connecting surface 251, the connecting device needs to perform an electrical connection operation on the first tab 232 and the first adapter 24 at one height position and perform an electrical connection operation on the second tab 233 and the second adapter 25 at another height position, which may cause the movement trajectory of the connecting head of the connecting device to become complex, affect the welding accuracy of the connecting device, and even cause a virtual welding phenomenon.

By adopting the above technical solution, the electrical connection operation can be performed between the first adapter 24 and the first tab 232 and between the second adapter 25 and the second tab 233 at the same height position, which facilitates the connection device to electrically connect the electrode assembly 23 to the electrode terminal 22 and the casing 21.

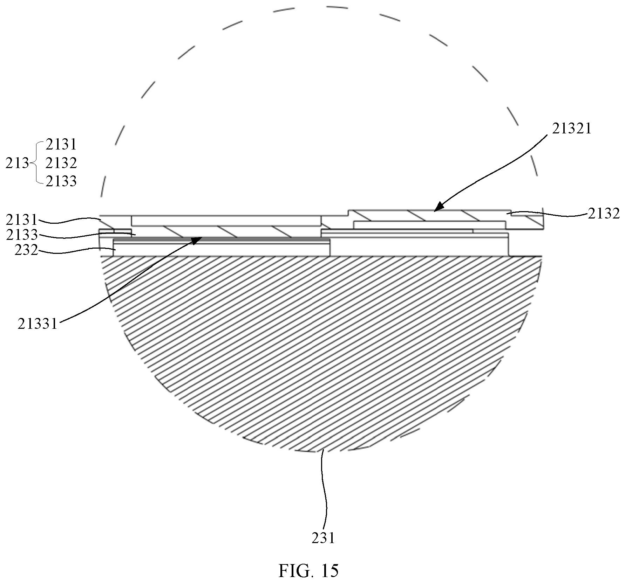

In some embodiments of the present application, referring to FIG. 15, the first wall 213 further includes a second boss 2133, the second boss 2133 is protruded from a surface of the wall body 2131 facing the electrode assembly 23, and the second tab 233 is connected to the second boss 2133.

The second boss 2133 is a part of the first wall 213 for connecting the second tab 233, in other words, in this embodiment, the second tab 233 is directly connected to the first wall 213, and the connection manner of the second tab 233 and the second boss 2133 may be, but is not limited to, welding, bonding, fastening, and the like. In some embodiments, the second boss 2133 and the wall 2131 may be an integrally formed member, for example, the second boss 2133 and the wall 2131 are integrally formed by a stamping process. In other embodiments, the second boss 2133 and the wall 2131 may be separately formed and then connected as a whole, and the connection manner between the second boss 2133 and the wall 2131 may be, but is not limited to, welding, bonding, fastening, or the like. It can be understood that the second boss 2133 protrudes from the surface of the wall body 2131 facing the electrode assembly 23 toward the direction close to the electrode assembly 23, at least part of the electrode terminal 22 protrudes from the surface of the wall body 2131 facing the electrode assembly 23 toward the direction close to the electrode assembly 23, and the protruding height of the second boss 2133 relative to the surface of the wall body 2131 facing the electrode assembly 23 may be the same as or different from the protruding height of the electrode terminal 22 relative to the surface of the wall body 2131 facing the electrode assembly 23. The shape of the second boss 2133 may be the same as the shape of the electrode terminal 22, or the shape of the electrode terminal 22 may be different, and the shape of the second boss 2133 may be, but is not limited to, cylindrical, prismatic, or the like. The first boss 2132 is electrically connected to one busbar 30, and the electrode terminal 22 is electrically connected to the other busbar 30.

By adopting the above technical solution, the difference between the connection height of the second tab 233 and the first wall 213 and the connection height of the first tab 232 and the electrode terminal 22 can be reduced, which facilitates the connection device to perform the electrical connection operation on the first wall 213 and the second tab 233.

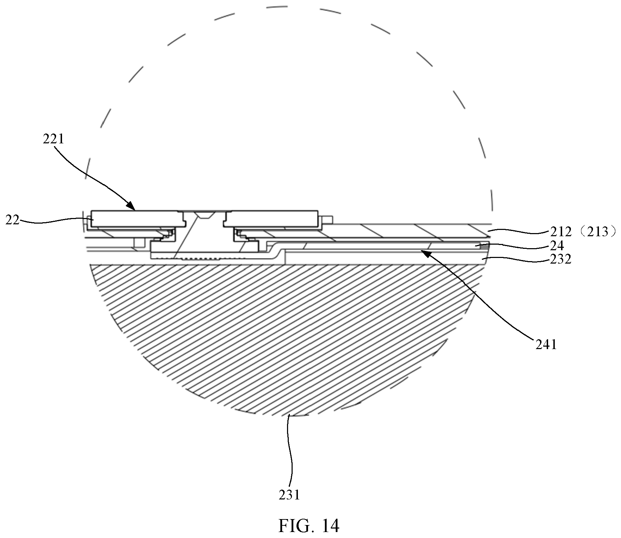

In some embodiments of the present application, referring to FIG. 14 and FIG. 15 together, the battery cell 20 further includes a first adapter 24, the first adapter 24 is connected between the electrode terminal 22 and the first tab 232, the first adapter 24 has a third connecting surface 241 for connecting the first tab 232, the second boss 2133 has a fifth connecting surface 21331 for connecting the second tab 233, and a height of the third connecting surface 241 is equal to a height of the fifth connecting surface 21331.

The fifth connecting surface 21331 is a surface of the second boss 2133 for connecting the second tab 233. In some embodiments, the fifth connecting surface 21331 is a surface of the second boss 2133 facing the electrode assembly 23. The second connecting surface 21331 may be a flat surface or a curved surface.

The height of the third connection surface 241 is equal to the height of the fifth connection surface 21331, and in some embodiments, in the case where the third connection surface 241 and the fifth connection surface 21331 are planes, the third connection surface 241 and the fifth connection surface 21331 are located on the same horizontal plane (a plane perpendicular to the height direction of the battery cell 20), and correspondingly, the lead-out height of the first tab 232 from the electrode body 231 toward the third connection surface 241 is equal to the lead-out height of the second tab 233 from the electrode body 231 toward the fifth connection surface 21331, that is, the electrical connection operation can be performed between the first adapter 24 and the first tab 232 and between the second boss 2133 and the second tab 233 at the same height position.

It should be noted that, due to manufacturing tolerances, there may be a certain height difference between the third connecting surface 241 and the fifth connecting surface 21331, and in this embodiment, the height difference between the third connecting surface 241 and the fifth connecting surface 21331 is less than or equal to 0.05 mm, that is, the height of the third connecting surface 241 is equal to the height of the fifth connecting surface 21331.

In the related art, the connection device is usually used to perform an electrical connection operation on the first tab 232 and the second tab 233, and if the height of the third connection surface 241 is greatly different from the height of the fifth connection surface 21331, the connection device needs to perform an electrical connection operation on the first tab 232 and the first adapter 24 at one height position, and perform an electrical connection operation on the second tab 233 and the second boss 2133 at another height position, which may cause the movement trajectory of the connection head of the connection device to become complex, affect the welding accuracy of the connection device, and even cause a virtual welding phenomenon.

By adopting the above technical solution, the electrical connection operation between the first adapter 24 and the first tab 232 and between the second boss 2133 and the second tab 233 can be performed at the same height position, which facilitates the connection device to electrically connect the electrode assembly 23 to the electrode terminal 22 and the casing 21.

In some embodiments of the present application, referring to FIG. 15, the second boss 2133 has a fifth connecting surface 21331 for connecting the second tab 233, the electrode terminal 22 has a sixth connecting surface for connecting the first tab 232, and the height of the fifth connecting surface 21331 is equal to the height of the sixth connecting surface.

The sixth connection surface is a surface of the electrode terminal 22 for connecting the first tab 232. In some embodiments, the sixth connection surface is a surface of the electrode terminal 22 facing the electrode assembly 23. The sixth connecting surface may be a flat surface or a curved surface.

The height of the fifth connection surface 21331 is equal to the height of the sixth connection surface, and in some embodiments, in the case where the fifth connection surface 21331 and the sixth connection surface are planes, the fifth connection surface 21331 and the sixth connection surface are located on the same horizontal plane (a plane perpendicular to the height direction of the battery cell 20), and correspondingly, the lead-out height of the first tab 232 from the electrode body 231 toward the sixth connection surface is equal to the lead-out height of the second tab 233 from the electrode body 231 toward the fifth connection surface 21331, that is, the electrical connection operation can be performed between the electrode terminal 22 and the first tab 232 and between the second boss 2133 and the second tab 233 at the same height position.

It should be noted that, due to manufacturing tolerances, there may be a certain height difference between the fifth connecting surface 21331 and the sixth connecting surface, and in this embodiment, the height difference between the fifth connecting surface 21331 and the sixth connecting surface is less than or equal to 0.05 mm, that is, the height of the fifth connecting surface 21331 is equal to the height of the sixth connecting surface.

In the related art, the connection device is usually used to perform an electrical connection operation on the first tab 232 and the second tab 233, and if the height of the sixth connection surface is greatly different from the height of the fifth connection surface 21331, the connection device needs to perform an electrical connection operation on the first tab 232 and the electrode terminal 22 at one height position, and perform an electrical connection operation on the second tab 233 and the second boss 2133 at another height position, which may cause the movement trajectory of the connection head of the connection device to become complex, affect the welding accuracy of the connection device, and even cause a virtual welding phenomenon.

By adopting the above technical solution, the electrical connection operation between the electrode terminal 22 and the first tab 232 and between the second boss 2133 and the second tab 233 can be performed at the same height position, which facilitates the connection device to electrically connect the electrode assembly 23 to the electrode terminal 22 and the casing 21.

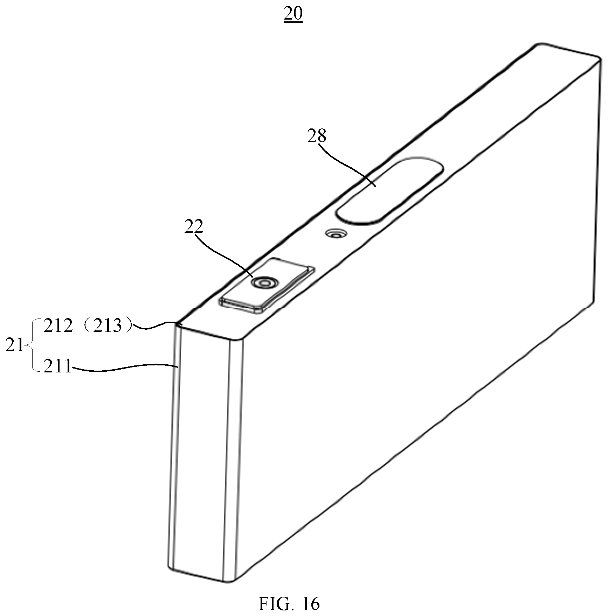

In some embodiments of the present application, referring to FIG. 16 to FIG. 22 together, the casing 21 includes a first wall 213 and a second wall 2111, the electrode terminal 22 is disposed on the first wall 213 and is insulated from the first wall 213, and the second tab 233 is connected to the second wall 2111.

The first wall 213 may be one of a bottom wall of the casing body 211, a side wall of the casing body 211, and the cover body 212, and the second wall 2111 may be the other one of the bottom wall of the casing body 211, the side wall of the casing body 211, and the cover body 212, where the bottom wall of the casing body 211 refers to a wall portion of the casing body 211 that is disposed opposite to the cover body 212, and the side wall of the casing body 211 refers to a wall portion of the casing body 211 that is located between the cover body 212 and the bottom wall of the casing body 211 and that is connected to a periphery of the bottom wall of the casing body 211. In some embodiments, the first wall 213 forms the cover body 212, and the second wall 2111 forms a bottom wall of the casing body 211 or a side wall of the casing body 211. The connection mode between the second tab 233 and the second wall 2111 may be, but is not limited to, welding, fastening, bonding, and the like.

By adopting the above technical solution, it is convenient to electrically connect the second tab 233 to the casing 21.

In some embodiments of the present application, referring to FIG. 16 to FIG. 20 together, the second wall 2111 is provided with a through hole 21111, the through hole 21111 communicates the internal environment of the casing 21 with the external environment of the casing 21, and the second tab 233 passes through the through hole 21111 and is connected to the second wall 2111.

In some embodiments, the casing 21 further includes a third wall, the first wall 213 forms a cover body 212, the electrode terminal 22 is disposed on the cover body 212, the second wall 2111 forms a bottom wall of the casing body 211, that is, the second wall 2111 is disposed opposite to the cover body 212, the third wall forms a side wall of the casing body 211, the first tab 232 is connected to a side of the electrode body 231 facing the cover body 212, so as to electrically connect the first tab 232 to the electrode terminal 22, and the second tab 233 is connected to a side of the electrode body 231 facing the bottom wall of the casing body 211, so as to electrically connect the second tab 233 to the second wall 2111. The second wall 2111 and the third wall may be an integrally formed member, for example, the second wall 2111 and the third wall are integrally formed by a stamping process, the second wall 2111 and the third wall may also be separately formed and then connected as a whole, and the connection manner between the second wall 2111 and the third wall may be, but is not limited to, welding, bonding, or the like.

The through hole 21111 refers to a hole structure penetrating through a surface of the second wall 2111 facing the electrode assembly 23 and a surface of the second wall 2111 facing away from the electrode assembly 23, and after the electrode assembly 23 is placed in the internal environment of the casing 21, the second tab 233 may extend out to the external environment of the casing 21 through the through hole 21111, and the second tab 233 and the second wall 2111 are electrically connected in the external environment of the casing 21. The shape of the through hole 21111 may be adapted to the shape of the second tab 233, and in some embodiments, the second tab 233 is of a sheet structure, the through hole 21111 is of a slit structure, and the width of the through hole 21111 is slightly greater than the thickness of the second tab 233, so that the second tab 233 can pass through the through hole 21111, and at the same time, the through hole can limit the position of the second tab 233.

In some embodiments, the second tab 233 is welded to the second wall 2111. Specifically, after the electrode assembly 23 is placed in the internal environment of the casing 21, the second tab 233 may extend out to the external environment of the casing 21 through the through hole 21111, and the second tab 233 and the second wall 2111 are welded in the external environment of the casing 21.

By adopting the above technical solution, the second tab 233 and the second wall 2111 can be electrically connected outside the casing 21, which facilitates the electrical connection of the second tab 233 to the second wall 2111, thereby effectively improving the assembly efficiency of the battery cell 20.

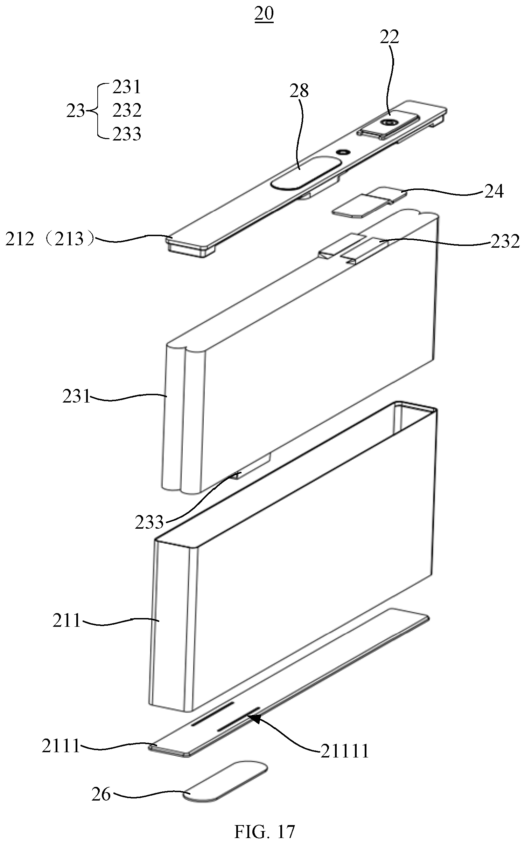

In some embodiments of the present application, referring to FIG. 17 to FIG. 20, the battery cell 20 further includes a cover 26, and the cover 26 covers the through hole 21111 and cooperates with the second wall 2111 to clamp the second tab 233.

The cover 26 is used to close the through hole 21111 to prevent foreign objects such as moisture and dust from entering the internal environment of the battery cell 20 through the through hole 21111. The cover 26 also cooperates with the second wall 2111 to clamp the second tab 233, specifically, after the second tab 233 extends out to the external environment of the casing 21 through the through hole 21111, the cover 26 cooperates with the second wall 2111 to clamp the portion of the second tab 233 located in the external environment of the casing 21, so as to shape the portion of the second tab 233 located in the external environment of the casing 21, so that the portion of the second tab 233 located in the external environment of the casing 21 can be tightly attached to the second wall 2111. In some embodiments, in the case where the cover 26 cooperates with the second wall 2111 to clamp the second tab 233, the second tab 233 may be welded to the second wall 2111 through the cover 26 by a penetration welding process.

In some embodiments, in the thickness direction of the second wall 2111, the projection of the second tab 233 is located within the projection range of the cover 26, in other words, the cover 26 can completely cover the second tab 233 to protect the second tab 233.

By adopting the above technical solution, not only the second tab 233 can be shaped, so that the second tab 233 can be tightly attached to the second wall 2111, thereby reducing the risk of the second tab 233 being detached from the second wall 2111, but also the second tab 233 can be effectively protected, thereby reducing the risk of damage to the second tab 233.

In some embodiments of the present application, the surface of the cover 26 facing away from the electrode assembly 23 is flush with the surface of the second wall 2111 facing away from the electrode assembly 23.

In some embodiments, the surface of the cover 26 facing away from the electrode assembly 23 and the surface of the second wall 2111 facing away from the electrode assembly 23 are both planes, and the surface of the cover 26 facing away from the electrode assembly 23 and the surface of the second wall 2111 facing away from the electrode assembly 23 are on the same horizontal plane (a plane perpendicular to the height direction of the battery cell 20).

By adopting the above technical solution, the outer surface of the battery cell 20 can be made flatter, so that the battery cells 20 can be neatly arranged inside the battery 100.

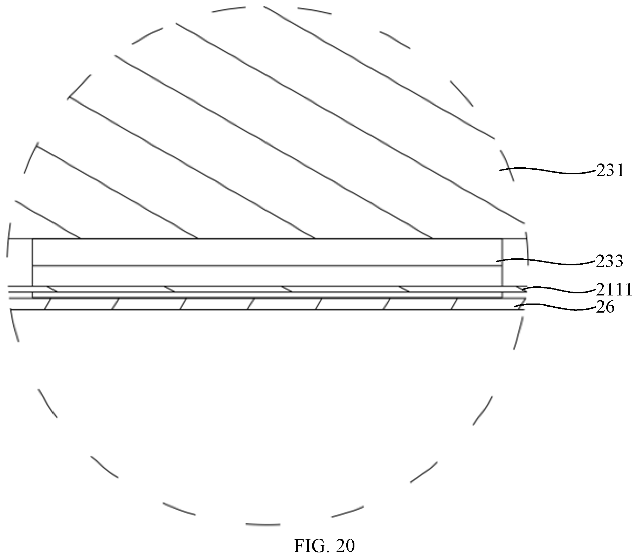

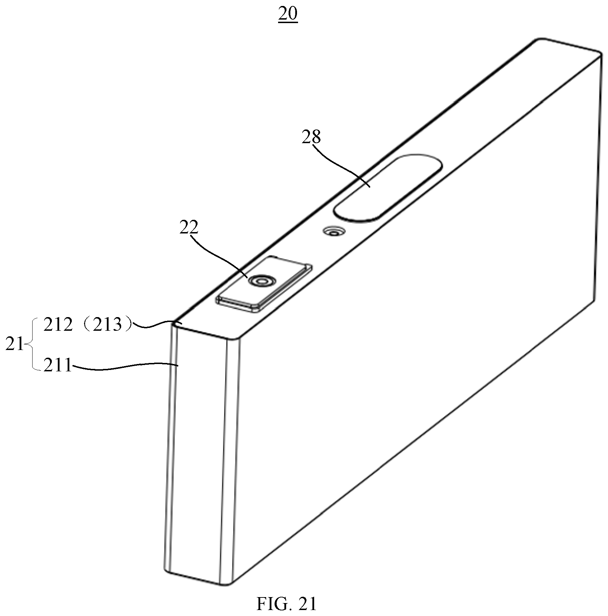

In some embodiments of the present application, referring to FIG. 20 and FIG. 21, the battery cell 20 further includes a positioning member 27 disposed on the second wall 2111, and the positioning member 27 is configured to limit the position of the second tab 233, so that the second tab 233 is in contact with the second wall 2111.

The positioning member 27 is a component for limiting the position of the second tab 233, and after the electrode assembly 23 and the positioning member 27 are placed in the casing 21, the second tab 233 can be kept in contact with the second wall 2111 under the limiting action of the positioning member 27. In some embodiments, the electrode assembly 23 and the positioning member 27 may be assembled first, so that the positioning member 27 defines the second tab 233 at a specific position, and then the electrode assembly 23 and the positioning member 27 are placed together into the casing 21. The positioning member 27 may be an integrally formed member or a separate connecting member. The material of the positioning member 27 may be, but is not limited to, plastic, aluminum, steel, copper, or the like. In some embodiments, in order to further reduce the weight of the battery cell 20 and improve the mass energy density of the battery cell 20, the material of the positioning member 27 is plastic, and the plastic may be, but is not limited to, polypropylene, polyester resin, soluble polytetrafluoroethylene, etc.

In some embodiments, in the case where the positioning member 27 limits the second tab 233 at a specific position and the electrode assembly 23 and the positioning member 27 are placed in the casing 21, the second tab 233 may be welded to the second wall 2111 through the second wall 2111 by a penetration welding process.

By adopting the above technical solution, after the positioning member 27 and the electrode assembly 23 are placed in the casing 21, the position of the second tab 233 can be limited by the positioning member 27 so that the second tab 233 is in contact with the second wall 2111, which facilitates the electrical connection of the second tab 233 to the second wall 2111, thereby effectively improving the assembly efficiency of the battery cell 20.

In some embodiments of the present application, referring to FIG. 21, the positioning member 27 is provided with a positioning hole, and the second tab 233 is disposed through the positioning hole, so that the second tab 233 is in contact with the second wall 2111.

The positioning hole is a hole structure for limiting the second tab 233 at a specific position, and it can be understood that the second tab 233 can extend through the positioning hole toward the direction close to the second wall 2111, and in the case that the second tab 233 is at the specific position, the second tab 233 can maintain a state of being in contact with the second wall 2111. The shape of the positioning hole may be adapted to the shape of the second tab 233, and in some embodiments, the second tab 233 is of a sheet structure, the positioning hole is of a slit structure, and the width of the positioning hole is slightly greater than the thickness of the second tab 233, so that the second tab 233 can pass through the positioning hole and can also play a role in limiting the second tab 233.

The opening direction of the positioning hole may be parallel to the surface of the second wall 2111 facing the electrode assembly 23, or may be perpendicular to the surface of the second wall 2111 facing the electrode assembly 23, or may be inclined to the surface of the second wall 2111 facing the electrode assembly 23. In some embodiments, the opening direction of the positioning hole is inclined relative to the surface of the second wall 2111 facing the electrode assembly 23, so that in the case where the second tab 233 is disposed through the positioning hole, the second tab 233 is also inclined relative to the surface of the second wall 2111 facing the electrode assembly 23, and after the electrode assembly 23 and the positioning member 27 are placed in the casing 21, the second wall 2111 can press against the end of the second tab 233 away from the electrode body 231, so that the second tab 233 is gradually bent until the second tab 233 is attached to the second wall 2111.

By adopting the above technical solution, the second tab 233 is effectively positioned.

In some embodiments of the present application, the battery cell 20 further includes an insulating layer member (not shown in the figure), and the insulating layer member covers an outer surface of the casing 21.

The insulating layer member is a member for insulating and separating the battery cell 20 from other conductive components. In some embodiments, the insulating layer member is an insulating film, the insulating film covers the outer surface of the casing 21, and the material of the insulating film may be, but is not limited to, polyimide, polyethylene, polyvinylidene fluoride, polytetrafluoroethylene, and the like.

Of course, in other embodiments, the insulating layer member may also be an insulating coating, and the insulating coating is coated on the outer surface of the casing 21.

By adopting the above technical solution, two adjacent battery cells 20 in the battery 100 are effectively insulated and separated, thereby reducing the risk of short circuit of the battery 100 and effectively improving the safety performance of the battery 100.

In a second aspect, referring to FIG.2 to FIG.5 together, the embodiment of the present application further provides a battery 100, including the battery cell 20 according to any one of the above embodiments.

Because the battery 100 provided in this embodiment of the present application uses the battery cell 20 according to any one of the foregoing embodiments, energy density of the battery 100 is effectively improved.

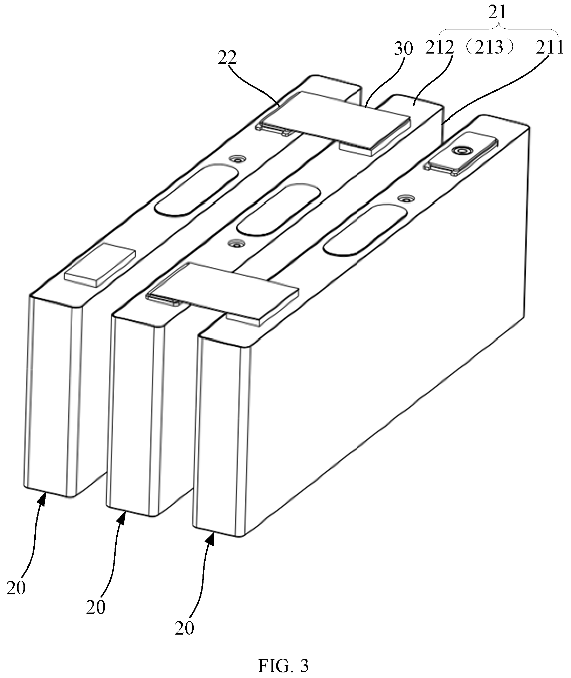

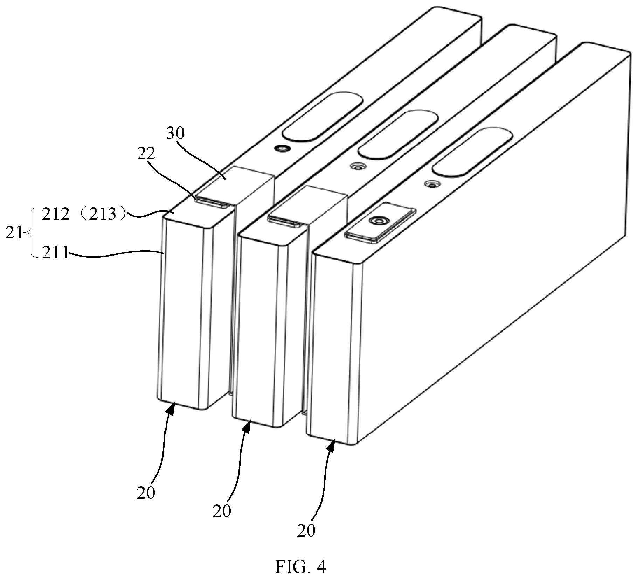

In some embodiments of the present application, referring to FIG. 3 and FIG. 4, the battery 100 further includes a busbar 30, there are a plurality of battery cells 20, and the busbar 30 is electrically connected between the electrode terminal 22 of one battery cell 20 and the casing 21 of another battery cell 20.

The busbar 30 is a component for electrically connecting at least two battery cells 20.

In some embodiments, referring to FIG. 3, the second tab 233 is electrically connected to the cover body 212, and the busbar 30 is electrically connected between the electrode terminal 22 of one battery cell 20 and the cover body 212 of another battery cell 20.

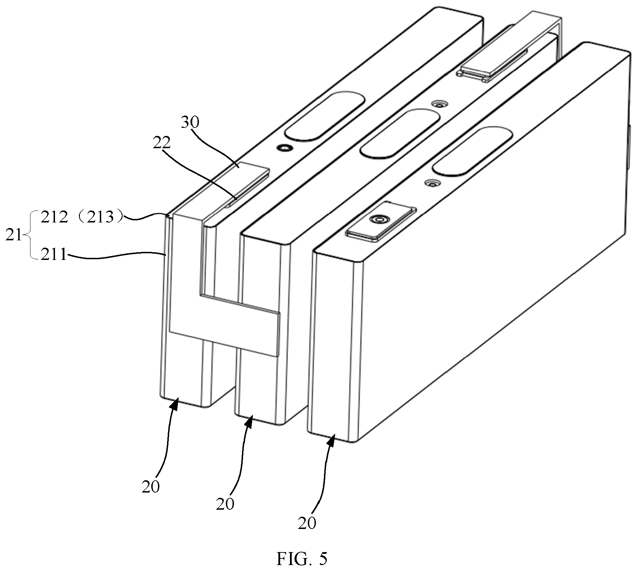

In some other embodiments, referring to FIG. 4 and FIG. 5, the second tab 233 is electrically connected to the casing body 211, and the busbar 30 is electrically connected between the electrode terminal 22 of one battery cell 20 and the casing body 211 of another battery cell 20. As an example, as shown in FIG. 4, the busbar 30 is electrically connected between the electrode terminal 22 of one battery cell 20 and the bottom wall of the casing body 211 of another battery cell 20. As an example, as shown in FIG. 5, the busbar 30 is electrically connected between the electrode terminal 22 of one battery cell 20 and the side wall of the casing body 211 of another battery cell 20.

By adopting the above technical solution, it is convenient to electrically connect the battery cells 20 in the battery 100.

In a third aspect, referring to FIG.1, this embodiment further provides an electric device, including the battery cell 100 according to any one of the above embodiments.

The electric device provided in this embodiment of the present application uses the battery 100 according to any one of the foregoing embodiments, thereby effectively improving endurance performance of the electric device.

The above are only the preferred embodiments of the present application and are not intended to limit the present application. Any modifications, equivalent replacements, improvements, etc. made within the spirit and principles of the present application shall be included in the scope of protection of the present application.

## Claims

1. A battery cell, comprising:
a casing;
an electrode terminal disposed on the casing and insulated from the casing;
an electrode assembly accommodated in the casing, the electrode assembly including a first tab and a second tab, the polarity of the first tab being opposite to the polarity of the second tab, the first tab being electrically connected to the electrode terminal, and the second tab being electrically connected to the casing.

2. The battery cell according to claim 1, wherein the casing comprises a first wall, the electrode terminal is disposed on the first wall and is insulated from the first wall, and the second tab is connected to the first wall.

3. The battery cell according to claim 2, wherein the first wall includes a wall body and a first boss, the electrode terminal is disposed on the wall body and is configured to be electrically connected to one busbar, and the first boss is protruded from a surface of the wall body facing away from the electrode assembly and is configured to be electrically connected to another busbar.

4. The battery cell according to claim 3, wherein the first boss has a first connection surface configured to be connected to the busbar, the electrode terminal has a second connection surface configured to be connected to the busbar, and the height of the first connection surface is equal to the height of the second connection surface.

5. The battery cell according to any one of claims 2 to 4, wherein the battery cell further includes a first adapter and a second adapter, the first adapter is connected between the electrode terminal and the first tab, and the second adapter is connected between the first wall and the second tab.

6. The battery cell according to claim 5, wherein the first adapter has a third connection surface configured to connect the first tab, the second adapter has a fourth connection surface configured to connect the second tab, and the height of the third connection surface is equal to the height of the fourth connection surface.

7. The battery cell according to any one of claims 2 to 4, wherein the first wall includes a wall body and a second boss, the electrode terminal is disposed on the wall body, the second boss is protruded from a surface of the wall body facing the electrode assembly, and the second tab is connected to the second boss.

8. The battery cell according to claim 7, wherein the battery cell further includes a first adapter, the first adapter is connected between the electrode terminal and the first tab, the first adapter has a third connection surface configured to connect the first tab, the second boss has a fifth connection surface configured to connect the second tab, and the height of the third connection surface is equal to the height of the fifth connection surface.

9. The battery cell according to claim 7, wherein the second boss has a fifth connection surface for connecting the second tab, the electrode terminal has a sixth connection surface for connecting the first tab, and the height of the fifth connection surface is equal to the height of the sixth connection surface.

10. The battery cell according to claim 1, wherein the casing includes a first wall and a second wall, the electrode terminal is disposed on the first wall and is insulated from the first wall, and the second tab is connected to the second wall.

11. The battery cell according to claim 10, wherein the second wall is provided with a through hole, the through hole communicates an internal environment of the casing with an external environment of the casing, and the second tab passes through the through hole and is connected to the second wall.

12. The battery cell according to claim 11, wherein the battery cell further includes a cover, and the cover is disposed on the through hole and cooperates with the second wall to clamp the second tab.

13. The battery cell according to claim 12, wherein the surface of the cover facing away from the electrode assembly is flush with the surface of the second wall facing away from the electrode assembly.

14. The battery cell according to claim 10, wherein the battery cell further comprises a positioning member disposed on the second wall, and the positioning member is configured to limit the position of the second tab, so that the second tab is in contact with the second wall.

15. The battery cell according to claim 14, wherein the positioning member is provided with a positioning hole, and the second tab penetrates through the positioning hole, so that the second tab is in contact with the second wall.

16. The battery cell according to any one of claims 10 to 15, wherein the first wall is disposed opposite to the second wall, the electrode assembly further includes an electrode body, the first tab is connected to the side of the electrode body facing the first wall, and the second tab is connected to the side of the electrode body facing the second wall.

17. The battery cell according to any one of claims 2 to 16, wherein the casing includes a casing body and a cover body covering the casing body, and the first wall forms the cover body.

18. The battery cell according to any one of claims 1 to 17, wherein the battery cell further includes an insulating layer member, and the insulating layer member covers an outer surface of the casing.

19. The battery cell according to any one of claims 1 to 18, wherein the battery cell is a sodium ion battery cell.

20. The battery cell according to any one of claims 1 to 19, wherein the casing is one of an aluminum casing, a steel casing, and a copper casing.

21. A battery, including the battery cell according to any one of claims 1 to 20.

22. The battery according to claim 21, wherein the battery further includes a busbar, there are a plurality of battery cells, the busbar is electrically connected between the electrode terminal of one battery cell and the casing of another battery cell.

23. The battery according to claim 22, wherein
the busbar is connected between the electrode terminal of one battery cell and the bottom wall of the casing of the other battery cell; or
the busbar is connected between the electrode terminal of one battery cell and the side wall of the casing of the other battery cell.

24. An electric device, including the battery according to any one of claims 21 to 23.
